# EUROPEAN PATENT APPLICATION

(11) **EP 3 445 089 A1**
(43) Date of publication of application: **20.02.2019**
(21) Application number: 16905037.4
(22) Date of filing: 16.06.2016
(51) Int. Cl.: H04W 36/08

(54) **WIRELESS COMMUNICATION METHOD, APPARATUS, TERMINAL AND BASE STATION**

(71) Applicant: Guangdong OPPO Mobile Telecommunications Corp., Ltd., Guangdong 523860 (CN)
(72) Inventor: TANG, Hai, Dongguan Guangdong 523860 (CN)
(74) Representative: Manitz Finsterwald Patentanwälte PartmbB
(86) International application number: PCT/CN2016/085978
(87) International publication number: WO 2017/214921

(57) **Abstract**

Embodiments of the present disclosure provide a method, an apparatus, a terminal and a base station for wireless communication. The method includes: configuring a first base station set to provide service for the terminal. The apparatus includes a configuring module configured to configure the first base station set to provide service for the terminal. By configuring the first base station set for the terminal, the terminal may establish a connection with network by means of a base station in the first base station set, and thus increase flexibility of the terminal in establishing the connection with network via the base station.

## Description

### TECHNICAL FIELD

The present disclosure relates to the field of communications, and more particularly, to a method, an apparatus, a terminal and a base station for wireless communication.

### BACKGROUND

In a communication system, a mobility management needs to be performed to guarantee continuity of services of the terminal. For example, when the terminal moves from an area covered by a source cell to an area covered by a target cell, the terminal needs to timely complete handover between cells. Particularly when the source cell and the target cell respectively belong to different base stations, the terminal needs to complete handover between cells.

Generally, when the terminal frequently moves, cell handover is needed because the terminal is kept in a connected state. That is, the terminal is handed over from the source cell to the target cell. A base station (target base station) corresponding to the target cell needs to establish a signaling connection (for example, a signaling connection established via S1 interface) between the terminal and a core network element, and obtain context information of the terminal from a base station (source base station) corresponding to the source cell. That is, manners of establishing a connection between the terminal and network via the base station are single.

### SUMMARY

The present disclosure provides a method and an apparatus for wireless communication to increase flexibility of the terminal in establishing a connection with network via a base station.

In a first aspect, the present disclosure provides a method for wireless communication. The method includes: configuring a first base station set to provide service for the terminal.

In this solution, by configuring the first base station set for the terminal, the terminal may establish a connection with network by means of a base station in the first base station set, and thus increase flexibility of the terminal in establishing the connection with network via the base station.

In combination with the first aspect, in a possible implementation according to the first aspect, at least a part of base stations in the first base station set establish a signaling connection between the terminal and a core network element; and/or at least a part of base stations store context information of the terminal.

In this solution, at least a part of base stations in the first base station set establish a signaling connection between the terminal and the core network element, and/or at least a part of base stations store context information of the terminal. Therefore, when the terminal establishes a connection with network by means of a base station in the first base station set, there may be a variety of manners of connecting the terminal to the base station in the first base station set, making communications between the terminal and the base station in the first base station set more flexible.

Further, when the terminal is within an area covered by a plurality of base stations having established the signaling connection with the core network element and storing the context information of the terminal, the terminal may not proceed with a base station handover procedure to save signaling overhead and increase efficiency of the terminal in accessing network when the terminal needs to establish a connection with network by means of the base station.

In combination with the first aspect or any one of the above possible implementations, in a possible implementation according to the first aspect, the method further includes: transmitting indication information of the first base station set to the terminal. The indication information of the first base station set is indicative of a base station in the first base station set.

In this solution, because mobility of the terminal may be regular, the terminal may obtain the first base station set by means of storage or measurement in follow-up set updating procedures, and may transmit the first base station set, as a recommended first base station set, to the base station, such that the area covered by the established first base station set is more in line with mobility requirements of the terminal.

In combination with the first aspect or any one of the above possible implementations, in a possible implementation according to the first aspect, the base station receives indication information transmitted by the terminal. The indication information is indicative of that a second base station set needs to be updated. The second base station set provides service for the terminal before configuring the first base station set to provide service for the terminal.

In this solution, the terminal transmits indication information to the base station, such that the base station may timely configure the first base station set for the terminal based on the indication information transmitted by the terminal.

In combination with the first aspect or any one of the above possible implementations, in a possible implementation according to the first aspect, when a serving base station corresponding to a current serving cell of the terminal is positioned at edge of an area covered by the second base station set, the receiving indication information transmitted by the terminal includes: receiving the indication information transmitted by the terminal. The indication information is indicative of a possibility that the terminal may move out of the area covered by the second base station set.

In this solution, when a serving base station corresponding to a current serving cell of the terminal is positioned at edge of the area covered by the second base station set, the terminal transmits indication information to the base station, such that the base station may timely configure the first base station set for the terminal based on the indication information transmitted by the terminal.

In combination with the first aspect or any one of the above possible implementations, in a possible implementation according to the first aspect, when a serving base station corresponding to a current serving cell of the terminal does not belong to the second base station set, the receiving indication information transmitted by the terminal includes: receiving the indication information transmitted by the terminal. The indication information is further indicative of a fact that the terminal has moved out of the area covered by the second base station set.

In this solution, when the serving base station corresponding to the current serving cell of the terminal does not belong to the second base station set, the terminal transmits indication information to the base station, such that the base station may timely configure the first base station set for the terminal based on the indication information transmitted by the terminal.

In combination with the first aspect or any one of the above possible implementations, in a possible implementation according to the first aspect, the configuring a first base station set to provide service for a terminal includes: configuring, by any network element selected from a base station, a radio network element and a core network element providing service for the terminal, the first base station set to provide service for the terminal.

In combination with the first aspect or any one of the above possible implementations, in a possible implementation according to the first aspect, the configuring, by any network element selected from a base station, a radio network element and a core network element providing service for the terminal, the first base station set to provide service for the terminal includes: configuring, by any network element selected from a base station, a radio network element and a core network element providing service for the terminal, the first base station set to provide service for the terminal based on terminal information.

In this solution, any network element selected from the base station, the radio network element and the core network element providing service for the terminal configures the first base station set for the terminal based on the terminal information, such that the first base station set is more in line with communication requirements of the terminal.

In combination with the first aspect or any one of the above possible implementations, in a possible implementation according to the first aspect, the terminal information includes at least one of information on a base station recommended by the terminal, cell list information, measurement information of cells contained in different base stations, and location information of the terminal.

In this solution, any network element selected from the base station, the radio network element and the core network element providing service for the terminal configures the first base station set for the terminal based on the terminal information, such that the first base station set is more in line with communication requirements of the terminal.

In combination with the first aspect or any one of the above possible implementations, in a possible implementation according to the first aspect, the establishing, by any network element selected from the base station, the radio network element and the core network element, the first base station set to provide service for the terminal includes: obtaining the first base station set after updating the second base station set by any network element selected from the base station, the radio network element and the core network element.

In this solution, obtaining the first base station set by updating the second base station set may simplify procedures of establishing the first base station set. A movement route of the terminal may be a round-trip route. Therefore, the first base station set is updated based on the first base station set corresponding to the current terminal, which also may ensure that the area covered by the first base station set gets closer to the movement route of the terminal.

In combination with the first aspect or any one of the above possible implementations, in a possible implementation according to the first aspect, the establishing, by any network element selected from the base station, the radio network element and the core network element providing service for the terminal, the first base station set to provide service for the terminal includes: establishing, by any network element selected from the base station, the radio network element and the core network element providing service for the terminal, the first base station set to provide service for the terminal based on a recommended base station set. The recommended base station set is transmitted by a serving cell of the terminal to the core network element.

In this solution, obtaining the first base station set by updating the base station set recommended by any network element selected from the base station, the radio network element and the core network element providing service for the terminal may simplify procedures of establishing the first base station set.

In combination with the first aspect or any one of the above possible implementations, in a possible implementation according to the first aspect, the signaling connection includes a signaling connection established via S1 interface between the base station and the core network element.

In this solution, the base station or the radio network element or the core network element providing service for the terminal needs to trigger a corresponding serving base station via existing X2 interface or S1 interface or new interface used in a follow-up standard to delete or establish an S1 interface signaling connection for the terminal and/or delete or add context of the terminal.

In a second aspect, the present disclosure provides a method for wireless communication. The method includes: establishing, by a terminal, a connection with network via a base station in a first base station set.

In this solution, the terminal may establish a connection with network by means of the base station in the first base station set, and thus increase flexibility of the terminal in establishing the connection with network via the base station.

In combination with the second aspect, in a possible implementation according to the second aspect, at least a part of base stations in the first base station set establish a signaling connection between the terminal and a core network element, and the at least a part of base stations store context information of the terminal.

In this solution, at least a part of base stations in the first base station set establish a signaling connection between the terminal and the core network element, and/or at least a part of base stations store context information of the terminal. Therefore, when the terminal establishes a connection with network by means of a base station in the first base station set, there may be a variety of manners of connecting the terminal to the base station in the first base station set, making communications between the terminal and the base station in the first base station set more flexible.

Further, when the terminal is within an area covered by a plurality of base stations having established the signaling connection with the core network element and storing the context information of the terminal, the terminal may not proceed with a base station handover procedure to save signaling overhead and increase efficiency of the terminal in accessing network when the terminal needs to establish a connection with network by means of the base station.

In combination with the second aspect or any one of the above possible implementations, in a possible implementation according to the second aspect, the method further includes: transmitting indication information by the terminal to the base station. The indication information is indicative of that a second base station set needs to be updated. The second base station set provides service for the terminal before configuring the first base station set.

In this solution, the terminal transmits indication information to the base station, such that the base station may timely configure the first base station set for the terminal based on the indication information transmitted by the terminal.

In combination with the second aspect or any one of the above possible implementations, in a possible implementation according to the second aspect, when a serving base station corresponding to a current serving cell of the terminal is positioned at edge of an area covered by the second base station set, the transmitting indication information by the terminal to the base station includes: transmitting the indication information by the terminal to the base station. The indication information is further indicative of a possibility that the terminal may move out of the area covered by the second base station set.

In this solution, when a serving base station corresponding to a current serving cell of the terminal is positioned at edge of the area covered by the second base station set, the terminal transmits indication information to the base station, such that the base station may timely configure the first base station set for the terminal based on the indication information transmitted by the terminal.

In combination with the second aspect or any one of the above possible implementations, in a possible implementation according to the second aspect, when a serving base station corresponding to a current serving cell of the terminal does not belong to the second base station set, the transmitting indication information by the terminal to the base station includes: transmitting the indication information by the terminal to the base station. The indication information is further indicative of a fact that the terminal has moved out of the area covered by the second base station set.

In this solution, when the serving base station corresponding to the current serving cell of the terminal does not belong to the second base station set, the terminal transmits indication information to the base station, such that the base station may timely configure the first base station set for the terminal based on the indication information transmitted by the terminal.

In combination with the second aspect or any one of the above possible implementations, in a possible implementation according to the second aspect, the method further includes: configuring, by the terminal, the first base station set to provide service for the terminal; and transmitting, by the terminal, indication information of the first base station set to the base station. The indication information of the first base station set is indicative of a base station in the first base station set.

In this solution, the terminal may select a first base station set for itself, such that the terminal may establish a connection with network by means of a base station in the first base station set, and thus increase flexibility of the terminal in establishing the connection with network via the base station.

In combination with the second aspect or any one of the above possible implementations, in a possible implementation according to the second aspect, the configuring, by the terminal, the first base station set to provide service for the terminal includes:
configuring, by the terminal based on terminal information such as a storage mode and a measurement mode, the first base station set to provide service for the terminal.

In this solution, the terminal configures the first base station set for the terminal based on the terminal information, such that the first base station set is more in line with communication requirements of the terminal.

In combination with the second aspect or any one of the above possible implementations, in a possible implementation according to the second aspect, the method further includes: receiving, by the terminal, acknowledgement information transmitted by the base station. The acknowledgement information is used for notifying the terminal of the first base station set providing service for the terminal.

In combination with the second aspect or any one of the above possible implementations, in a possible implementation according to the second aspect, the terminal information includes at least one of information on a base station recommended by the terminal, cell list information, measurement information of cells contained in different base stations, and location information of the terminal.

In this solution, the terminal configures the first base station set for the terminal based on the terminal information, such that the first base station set is more in line with communication requirements of the terminal.

In combination with the second aspect or any one of the above possible implementations, in a possible implementation according to the second aspect, the configuring, by the terminal, the first base station set to provide service for the terminal includes: obtaining the first base station set by updating a second base station set by the terminal.

In this solution, on the basis of the second base station set, the first base station set may be obtained by updating a base station in the second base station set, which simplifies procedures of establishing the first base station set.

In combination with the second aspect or any one of the above possible implementations, in a possible implementation according to the second aspect, the signaling connection includes a signaling connection established via S1 interface between the base station and the core network element.

In this solution, the base station or the radio network element or the core network element providing service for the terminal needs to trigger a corresponding serving base station via existing X2 interface or S1 interface or new interface to delete or establish an S1 interface signaling connection for the terminal and/or delete or add context of the terminal.

In a third aspect, the present disclosure provides a method for wireless communication. The method includes: establishing, by a base station in a first base station set, a connection between a terminal and a network. The first base station set is configured by the terminal to provide service for the terminal.

In this solution, the terminal may configure a first base station set for itself, such that the terminal may establish a connection with network by means of a base station in the first base station set, and thus increase flexibility of the terminal in establishing the connection with network via the base station.

In combination with the third aspect, in a possible implementation according to the third aspect, the method further includes: receiving, by the base station, indication information of the first base station set transmitted by the terminal. The indication information of the first base station set is indicative of a base station in the first base station set.

In this solution, the terminal transmits the indication information of the first base station set configured for itself to the base station, such that the terminal may establish a connection with network by means of a base station in the first base station set, and thus increase flexibility of the terminal in establishing the connection with network via the base station.

In combination with the third aspect or any one of the above possible implementations, in a possible implementation according to the third aspect, at least a part of base stations in the first base station set establish a signaling connection between the terminal and a core network element; and/or the at least a part of base stations store context information of the terminal.

In this solution, at least a part of base stations in the first base station set establish a signaling connection between the terminal and the core network element, and/or at least a part of base stations store context information of the terminal. Therefore, when the terminal establishes a connection with network by means of a base station in the first base station set, there may be a variety of manners of connecting the terminal to the base station in the first base station set, making communications between the terminal and the base station in the first base station set more flexible.

Further, when the terminal is within an area covered by a plurality of base stations having established the signaling connection with the core network element and storing the context information of the terminal, the terminal may not proceed with a base station handover procedure to save signaling overhead and increase efficiency of the terminal in accessing network when the terminal needs to establish a connection with network by means of the base station.

In combination with the third aspect or any one of the above possible implementations, in a possible implementation according to the third aspect, the method further includes: receiving, by the base station, indication information transmitted by the terminal. The indication information is indicative of that a second base station set needs to be updated. The second base station set provides service for the terminal before configuring the first base station set to provide service for the terminal.

In this solution, the terminal transmits indication information to the base station, such that the base station may timely configure the first base station set for the terminal based on the indication information transmitted by the terminal.

In combination with the third aspect or any one of the above possible implementations, in a possible implementation according to the third aspect, when a serving base station corresponding to a current serving cell of the terminal is positioned at edge of an area covered by the second base station set, the receiving, by the base station, indication information transmitted by the terminal includes: receiving, by the base station, the indication information transmitted by the terminal. The indication information is further indicative of a possibility that the terminal may move out of the area covered by the second base station set.

In this solution, when a serving base station corresponding to a current serving cell of the terminal is positioned at edge of the area covered by the second base station set, the terminal transmits indication information to the base station, such that the base station may timely configure the first base station set for the terminal based on the indication information transmitted by the terminal.

In combination with the third aspect or any one of the above possible implementations, in a possible implementation according to the third aspect, when a serving base station corresponding to a current serving cell of the terminal does not belong to the second base station set, the receiving, by the base station, indication information transmitted by the terminal includes: receiving, by the base station, the indication information transmitted by the terminal. The indication information is further indicative of a fact that the terminal has moved out of the area covered by the second base station set.

In this solution, when the serving base station corresponding to the current serving cell of the terminal does not belong to the second base station set, the terminal transmits indication information to the base station, such that the base station may timely configure the first base station set for the terminal based on the indication information transmitted by the terminal.

In combination with the third aspect or any one of the above possible implementations, in a possible implementation according to the third aspect, the terminal configures, based on the terminal information of the terminal, the first base station set to provide service for the terminal.

In this solution, the terminal configures the first base station set for the terminal based on the terminal information, such that the first base station set is more in line with communication requirements of the terminal.

In combination with the third aspect or any one of the above possible implementations, in a possible implementation according to the third aspect, the method further includes: transmitting, by the base station, acknowledgement information to the terminal. The acknowledgement information is used for notifying the terminal of the first base station set providing service for the terminal.

In this solution, the terminal configures the first base station set for the terminal based on the terminal information, such that the first base station set is more in line with communication requirements of the terminal.

In combination with the third aspect or any one of the above possible implementations, in a possible implementation according to the third aspect, the terminal information includes at least one of information on a base station recommended by the terminal, cell list information, measurement information of cells contained in different base stations, and location information of the terminal.

In this solution, the terminal configures the first base station set for the terminal based on the terminal information, such that the first base station set is more in line with communication requirements of the terminal.

In combination with the third aspect or any one of the above possible implementations, in a possible implementation according to the third aspect, the first base station set is obtained by updating a second base station set by the terminal.

In this solution, on the basis of the second base station set, the first base station set may be obtained by updating a base station in the second base station set, which simplifies procedures of establishing the first base station set.

In combination with the third aspect or any one of the above possible implementations, in a possible implementation according to the third aspect, the signaling connection includes a signaling connection established via S1 interface between the base station and the core network element.

In this solution, the base station or the radio network element or the core network element providing service for the terminal needs to trigger a corresponding serving base station via existing X2 interface or S1 interface or new interface to delete or establish an S1 interface signaling connection for the terminal and/or delete or add context of the terminal.

In a fourth aspect, the present disclosure provides an apparatus, which is a module configured to perform the method in the first aspect.

In a fifth aspect, the present disclosure provides a terminal. The apparatus is a module configured to perform the method in the second aspect.

In a sixth aspect, the present disclosure provides a base station. The apparatus is a module configured to perform the method in the third aspect.

In a seventh aspect, the present disclosure provides an apparatus for wireless communication. The apparatus includes: a memory, a processor, an input/output interface, a communication interface, and a bus system. The memory, the processor, the input/output interface and the communication interface are connected via the bus system. The memory is configured to store instructions. The processor is configured to execute the instructions stored in the memory. When the instructions are executed, the processor performs the method in the first aspect via the communication interface, and controls the input/output interface to receive inputted data and information and to output data such as an operation result.

In an eighth aspect, the present disclosure provides a terminal for wireless communication. The apparatus includes: a memory, a processor, an input/output interface, a communication interface, and a bus system. The memory, the processor, the input/output interface and the communication interface are connected via the bus system. The memory is configured to store instructions. The processor is configured to execute the instructions stored in the memory. When the instructions are executed, the processor performs the method in the second aspect via the communication interface, and controls the input/output interface to receive inputted data and information and to output data such as an operation result.

In a ninth aspect, the present disclosure provides a base station for wireless communication. The apparatus includes: a memory, a processor, an input/output interface, a communication interface, and a bus system. The memory, the processor, the input/output interface and the communication interface are connected via the bus system. The memory is configured to store instructions. The processor is configured to execute the instructions stored in the memory. When the instructions are executed, the processor performs the method in the third aspect via the communication interface, and controls the input/output interface to receive inputted data and information and to output data such as an operation result.

In a tenth aspect, the present disclosure provides a computer readable storage medium, which is configured to store program codes of a method for transmitting a search request. The program codes are instructions for performing the method in the first aspect.

In an eleventh aspect, the present disclosure provides a computer readable storage medium, which is configured to store program codes of a method for transmitting a search request. The program codes are instructions for performing the method in the second aspect.

In a twelfth aspect, the present disclosure provides a computer readable storage medium, which is configured to store program codes of a method for transmitting a search request. The program codes are instructions for performing the method in the third aspect.

In some implementations, the first base station set and/or the second base station set may be replaced with a set of base stations.

In some implementations, the signaling connection may refer to a control plane interface connection between the terminal and the core network element provided by the base station for the terminal. This interface may be new interface used in a follow-up standard.

In the present disclosure, by configuring the first base station set for the terminal, the terminal may establish a connection with network by means of a base station in the first base station set, and thus increase flexibility of the terminal in establishing the connection with network via the base station.

### BRIEF DESCRIPTION OF THE DRAWINGS

To describe the technical solutions in the embodiments of the present disclosure more clearly, the following will briefly introduce the accompanying drawings required for describing the embodiments of the present disclosure. Apparently, the accompanying drawings in the following description show merely some embodiments of the present disclosure, and a person of ordinary skill in the art may still derive other drawings from these accompanying drawings without creative efforts.
FIG. 1 illustrates a schematic flowchart of a method for cell handover;
FIG. 2 illustrates a schematic flowchart of a method for wireless communication according to an embodiment of the present disclosure;
FIG. 3 illustrates a schematic flowchart of a method for wireless communication according to an embodiment of the present disclosure;
FIG. 4 illustrates a schematic flowchart of a method for wireless communication according to an embodiment of the present disclosure;
FIG. 5 illustrates a schematic flowchart of a method for wireless communication according to an embodiment of the present disclosure;
FIG. 6 illustrates a schematic block diagram of an apparatus for wireless communication according to an embodiment of the present disclosure;
FIG. 7 illustrates a schematic block diagram of a terminal for wireless communication according to an embodiment of the present disclosure;
FIG. 8 illustrates a schematic block diagram of a base station for wireless communication according to an embodiment of the present disclosure;
FIG. 9 illustrates a schematic block diagram of an apparatus for wireless communication according to an embodiment of the present disclosure;
FIG. 10 illustrates a schematic block diagram of a terminal for wireless communication according to an embodiment of the present disclosure; and
FIG. 11 illustrates a schematic block diagram of a base station for wireless communication according to an embodiment of the present disclosure.

### DETAILED DESCRIPTION

Technical solutions in the embodiments of the present disclosure will be described clearly and completely below with reference to the accompanying drawings in the embodiments of the present disclosure. Apparently, the described embodiments are some but not all of the embodiments of the present disclosure. All other embodiments obtained by a person of ordinary skill in the art based on the embodiments of the present disclosure without creative efforts shall fall within the protection scope of the present disclosure.

It is to be understood that the technical solutions of the present disclosure may be used in various communication systems, for example, Global System of Mobile communication (GSM), Code Division Multiple Access (CDMA) System, Wideband Code Division Multiple Access (WCDMA), General Packet Radio Service (GPRS), and Long Term Evolution (LTE), etc.

It is also to be understood that a terminal may include user equipment (UE), which is also referred to as a mobile terminal or mobile user equipment and so on. The terminal may communicate with one or more core networks via radio access network (RAN). The user equipment may be a mobile terminal such as a mobile telephone (also referred to as a cellular telephone) or a computer having a mobile terminal such as portable, pocket, hand-held, vehicle-mounted mobile apparatuses or a mobile apparatus with a built-in computer. These apparatuses interchange languages and/or data with the RAN.

A base station may be a base transceiver station (BTS) in the GSM or the CDMA, or may be a Node B in the WCDMA, or may be an evolutional Node B (eNB or e-NodeB) in the LTE, and the present disclosure is not limited thereto. However, for ease of description, reference is made in following embodiments taking the e-Node B as an example.

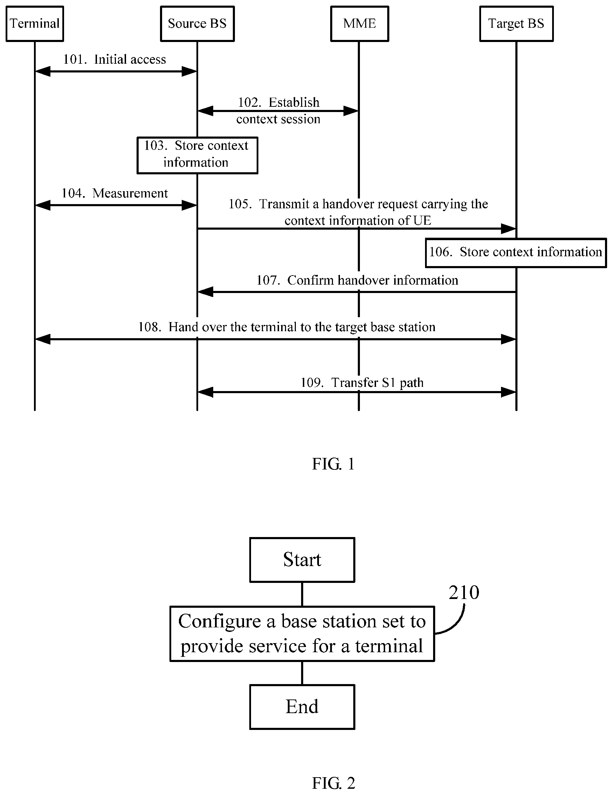

For ease of understanding, a method for cell handover is simply introduced with reference to FIG. 1. FIG. 1 illustrates a schematic flowchart of the method for cell handover. The method as shown in FIG. 1 includes following steps.

In Step 101, a terminal completes an initial access between the terminal and a source base station (a base station corresponding to a source cell). At this moment, the terminal goes from an idle state into a connected state.

In Step 102, the source base station establishes a context session with a mobility management entity (MME) corresponding to the terminal to obtain context information of the terminal.

In Step 103, the source base stations stores context information of the terminal.

In Step 104, the terminal completes measurement of adjacent cells. The terminal measures a measurement object based on configuration information transmitted by the source base station, and transmits a measurement report to the source base station, such that the base station may determine whether the terminal performs a cell handover based on the measurement report.

In Step 105, when the source base station determines that the terminal needs a handover, the source base station transmits a handover request to a target base station. The handover request carries the context information of the terminal.

In Step 106, the target base station stores the context information of the terminal.

In Step 107, the target base station transmits the confirmed handover request to the source base station.

In Step 108, the source base station hands over the terminal to the target base station.

In Step 109, an S1 path is transferred from the source base station to the target base station. After the terminal accesses the target base station, the target base station may transmit a path replacement request to the core network element to inform the core network element that the core network element transfers service of the terminal to the target base station and updates a node relation between a user plane and a control plane.

FIG. 2 illustrates a schematic flowchart of a method for wireless communication according to an embodiment of the present disclosure. It is to be understood that the method as shown in FIG. 2 may be performed by any network element selected from a base station, a radio network element and a core network element providing service for the terminal. The method as shown in FIG. 2 may include following steps.

In Step 210, a first base station set is configured so as to provide service for a terminal.

In this solution, by configuring the first base station set to provide service for the terminal, the terminal may establish a connection with network via a base station in the first base station set, thereby making manners of establishing the connection with network via the base station in the first base station set more flexible.

Alternatively, as an embodiment, at least a part of base stations in the first base station set establish a signaling connection between the terminal and a core network element; and/or at least a part of base stations in the first base station set store context information of the terminal.

Specifically, the terminal establishes the connection with network by means of a base station in the first base station set. When a certain base station in the first base station set has stored the context information of the terminal and the signaling connection between the terminal and the core network element has been established, the terminal may not proceed with a base station handover procedure and may directly connect to network via the base station.

When a certain base station in the first base station set only stores the context information of the terminal, and when the terminal needs to establish the connection with network by means of the base station, the base station only needs to establish, for the terminal, the signaling connection between the terminal and the core network element.

Therefore, when the terminal establishes the connection with network by means of a base station in the first base station set, at least a part of base stations in the first base station set establish a signaling connection between the terminal and the core network element, and/or at least a part of base stations store the context information of the terminal, which makes manners of establishing the connection with network via the base station in the first base station set more flexible.

Further, when the terminal is within an area covered by a plurality of base stations having established the signaling connection with the core network element and storing the context information of the terminal, the terminal may not proceed with a base station handover procedure to save signaling overhead and increase efficiency of the terminal in accessing network when the terminal needs to establish a connection with network by means of the base station.

Alternatively, as an embodiment, the method further includes: transmitting indication information of the first base station set to the terminal. The indication information of the first base station set is indicative of a base station in the first base station set.

Specifically, after configuring the first base station set to provide service for the terminal, the indication information of the first base station set is transmitted to the terminal. Because mobility of the terminal may be regular, the terminal may obtain the first base station set by means of storage or measurement in follow-up set updating procedures, and transmit the first base station set, as a recommended first base station set, to the base station, such that the area covered by the established first base station set is more in line with mobility requirements of the terminal.

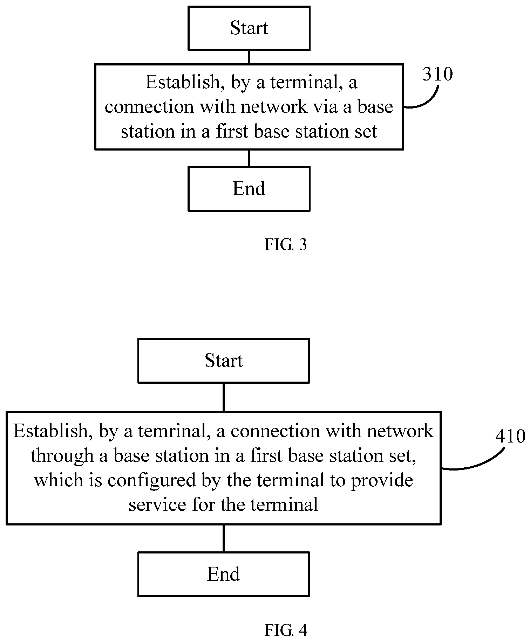

FIG. 3 illustrates a schematic flowchart of a method for wireless communication according to an embodiment of the present disclosure. The method as shown in FIG. 3 may include following steps.

In Step 310, a terminal establishes a connection with network via a base station in a first base station set.

In this solution, the terminal may establish a connection with network via the base station in the first base station set, and thus increase flexibility of the terminal in establishing the connection with network via the base station in the first base station set.

Alternatively, as an embodiment, at least a part of base stations in the first base station set establish a signaling connection between the terminal and a core network element; and/or at least a part of base stations in the first base station set store context information of the terminal.

Specifically, the terminal establishes the connection with network by means of a base station in the first base station set. When a certain base station in the first base station set has stored the context information of the terminal and the signaling connection between the terminal and the core network element has been established, the terminal may not proceed with a base station handover procedure and may directly connect to network via the base station.

When a certain base station in the first base station set only stores the context information of the terminal, and when the terminal needs to establish the connection with network by means of the base station, the base station only needs to establish, for the terminal, the signaling connection between the terminal and the core network element.

Therefore, when the terminal establishes the connection with network by means of a base station in the first base station set, at least a part of base stations in the first base station set establish a signaling connection between the terminal and the core network element, and/or at least a part of base stations store the context information of the terminal, which makes manners of establishing the connection with network via the base station in the first base station set more flexible.

Further, when the terminal is within an area covered by a plurality of base stations having established the signaling connection with the core network element and storing the context information of the terminal, the terminal may not proceed with a base station handover procedure to save signaling overhead and increase efficiency of the terminal in accessing network when the terminal needs to establish a connection with network by means of the base station.

Alternatively, as an embodiment, the method further includes: transmitting, by the terminal, indication information to the base station. The indication information is indicative of that a second base station set needs to be updated.

Specifically, after configuring the first base station set to provide service for the terminal, the indication information of the first base station set is transmitted to the terminal. Because mobility of the terminal may be regular, the terminal may obtain the first base station set by means of storage or measurement in follow-up set updating procedures, and transmit the first base station set, as a recommended first base station set, to the base station, such that the area covered by the established first base station set is more in line with mobility requirements of the terminal.

FIG. 4 illustrates a schematic flowchart of a method for wireless communication according to an embodiment of the present disclosure. The method as shown in FIG. 4 includes following steps.

In Step 410, a terminal establishes a connection between the terminal and a network by means of a base station in a first base station set. The first base station set is configured by the terminal to provide service for the terminal.

In this solution, by establishing a connection between network and the first base station set providing service for the terminal, the manners of establishing the connection with network via the base station in the first base station set are more flexible.

Alternatively, as an embodiment, the method further includes: receiving, by the base station, indication information of the first base station set transmitted by the terminal. The indication information of the first base station set is indicative of a base station in the first base station set.

It is to be understood that the terminal transmits the first base station set providing service for the terminal to a base station, the terminal may inform a base station in the first base station set of providing service for the terminal by means of the base station, or the terminal also may directly inform the base station in the first base station set of providing service for the terminal, which are not specifically limited by the present disclosure.

Alternatively, as an embodiment, at least a part of base stations in the first base station set establish a signaling connection between the terminal and a core network element; and/or the at least a part of base stations store context information of the terminal.

Specifically, after the terminal configures, for itself, the first base station set to provide service for the terminal, the terminal establishes the connection with network by means of a base station in the first base station set. When a certain base station in the first base station set has stored the context information of the terminal and the signaling connection between the terminal and the core network element has been established, the terminal may not proceed with a base station handover procedure and may directly connect to network via the base station.

When a certain base station in the first base station set only stores the context information of the terminal, and when the terminal needs to establish the connection with network by means of the base station, the base station only needs to establish, for the terminal, the signaling connection between the terminal and the core network element.

Therefore, when the terminal establishes the connection with network by means of a base station in the first base station set, at least a part of base stations in the first base station set establish a signaling connection between the terminal and the core network element, and/or at least a part of base stations store the context information of the terminal, which makes manners of establishing the connection with network via the base station in the first base station set more flexible.

Further, when the terminal is within an area covered by a plurality of base stations having established the signaling connection with the core network element and storing the context information of the terminal, the terminal may not proceed with a base station handover procedure to save signaling overhead and increase efficiency of the terminal in accessing network when the terminal needs to establish a connection with network by means of the base station.

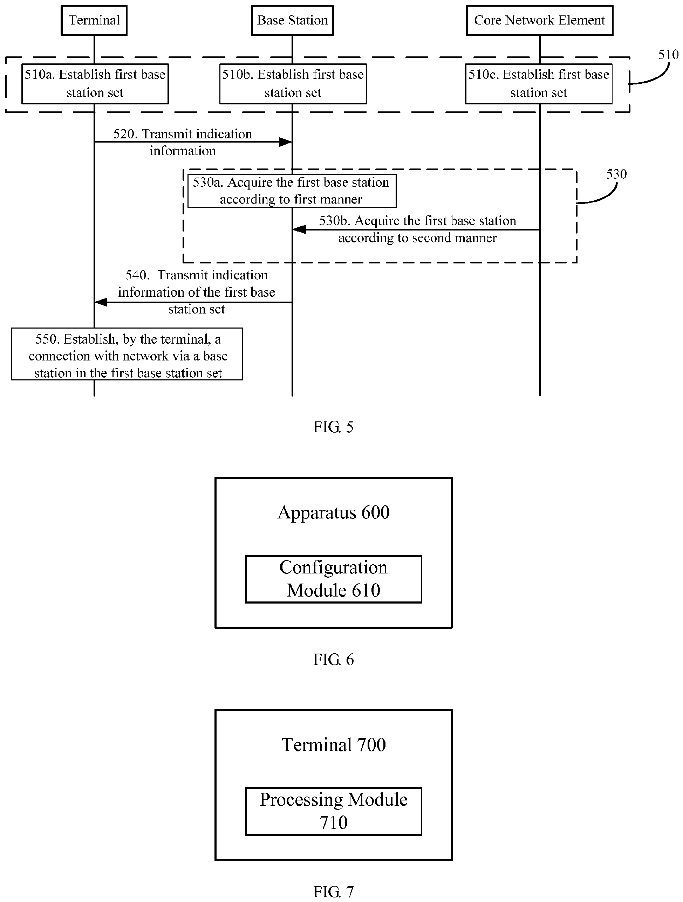

FIG. 5 illustrates a schematic flowchart of a method for wireless communication according to an embodiment of the present disclosure. It is to be understood that FIG. 5 illustrates detailed steps or operations of the method for wireless communication. However, these steps or operations are merely exemplary, and the establishments of the present disclosure also may perform other operations or variants of the operations in FIG. 5. Moreover, each step in FIG. 5 may be performed in accordance with different sequences presented in FIG. 5, and likely all the operations in FIG. 5 are not performed. Steps of the method as shown in FIG. 5 are specifically described below.

In Step 510, a first base station set is configured so as to provide service for a terminal.

Specifically, establishing the first base station set to provide service for the terminal may include: selecting, by the terminal, a first base station set (referring to Step 510a in FIG. 5) for the terminal itself; establishing, by a base station (referring to Step 510b in FIG. 5) to which the terminal is accessed or a core network element such as an MME (referring to Step 510c in FIG. 5), a first base station set for the terminal; or establishing, by a radio network element, a first base station set for the terminal.

When the terminal selects the first base station set for itself, the terminal needs to transmit indication information of the first base station set to a base station connected to the terminal, and the base station informs a base station in the first base station set. In follow-up updating procedures of the first base station set, the base station or the core network element may update the terminal. It is to be understood that a method of informing, by the base station, a base station in the first base station set is introduced in detail in the following, which is not repeated any more herein for brevity.

Alternatively, as an embodiment, the terminal configures, based on terminal information, the first base station set to provide service for the terminal.

Alternatively, as an embodiment, the method further includes: receiving, by the terminal, acknowledgement information transmitted by the base station. The acknowledgement information is used for notifying the terminal of the first base station set providing service for the terminal.

It is to be understood that after the terminal transmits, to a base station, the first base station set to provide service for the terminal, the base station may directly configure the first base station set for the terminal. The base station also may add or delete a base station in the first base station set transmitted by the terminal to generate the first base station set. The base station also may transmit the first base station set transmitted by the terminal to a radio network element or a core network element, such that the radio network element or the core network element adds or deletes the base station in the first base station set transmitted by the terminal to generate the first base station set.

It is also to be understood that the base station to which the terminal is accessed establishes the first base station set for the terminal. Specifically, the base station or the core network element establishes the first base station set for the terminal in the process of accessing the terminal to the base station; or the base station or the core network element establishes the first base station set for the terminal after the terminal is successfully accessed to the base station, the present disclosure does not impose a specific limit on time in which the base station establishes the first base station set for the terminal.

It is also to be understood that accessing the terminal to the base station may refer to a fact that a radio resource control (RRC) connection between the terminal and the base station is established, and the terminal goes from an idle state into a connected state.

It is also to be understood that the first base station set also may be established by the radio network element for the terminal. When the first base station set is established by the radio network element or the core network element, the base station may transmit the first base station set to the terminal.

Alternatively, as an embodiment, at least a part of base stations in the first base station set establish a signaling connection between the terminal and the core network element, and/or the at least a part of base stations store context information of the terminal.

Specifically, each base station in the first base station set establishes the signaling connection between the terminal and the core network element, and/or each base station in the first base station set stores context information of the terminal. Alternatively, a part of base stations in the first base station set establish the signaling connection between the terminal and the core network element, and/or a part of base stations store context information of the terminal.

It is to be understood that a part of base stations in the first base station set may refer to base stations corresponding to each neighboring cell among at least one neighboring cell of a cell to which the terminal is accessed, which is not specifically limited by the present disclosure.

It is also to be understood that the cell may be a cell formed by dividing a network signal coverage area into a plurality of areas. An access point may be arranged in each area (cell) to provide service for the terminal within this area. The cell may be a cell in the prior art, or may be one or more adjacent beams in beamforming, or may be a carrier wave within an area.

Alternatively, as an embodiment, the signaling connection includes a signaling connection established via S1 interface between the base station and the core network element.

Specifically, the signaling connection includes a dedicated S1 connection established via S1 interface. The signaling connection is a premise of service bearing connection, and the signaling connection may be used for controlling a connection between the terminal and network.

Alternatively, as an embodiment, the configuring, by any network element selected from a base station, a radio network element and a core network element providing service for the terminal, the first base station set to provide service for the terminal includes: configuring, by any network element selected from a base station, a radio network element and a core network element providing service for the terminal, the first base station set to provide service for the terminal based on terminal information of the terminal.

Alternatively, as an embodiment, the terminal information includes at least one of information on a base station recommended by the terminal, cell list information, measurement information of cells contained in different base stations, and location information of the terminal.

It is to be understood that the terminal information may be transmitted by the terminal to any network element selected from a base station, a radio network element and a core network element connected to the terminal.

In Step 520, the terminal transmits indication information to the base station. The indication information is indicative of that a second base station set needs to be updated. The second base station set provides service for the terminal before configuring the first base station set.

Specifically, the current terminal is provided with the second base station set. When the terminal moves out of the area covered by the second base station set, that is, when the base station to which the terminal is accessed does not belong to the second base station set, the terminal may transmit indication information to the base station. The indication information is indicative of that the second base station set configured by the current terminal needs to be updated.

It is to be understood that after the base station receives the indication information transmitted by the terminal, the base station may regenerate the first base station set for the terminal. The base station also may add and/or delete, based on the second base station set, a base station in the second base station set configured by the current terminal. That is, the second base station set configured by the current terminal is updated. The present disclosure does not impose a specific limit on the operation after the base station receives the indication information transmitted by the terminal.

It is also to be understood that the terminal also may transmit, within the area covered by the second base station set, the indication information to the base station to which the terminal is accessed to indicate, to the currently accessed base station, that the second base station set configured by the terminal needs to be updated. That is, the base station receiving the indication information may belong to the second base station set configured by the terminal or may not belong to the second base station set configured by the terminal, on which the present disclosure does not impose a specific limit.

It is also to be understood that the terminal information may be carried in the indication information, or the terminal information may be separately transmitted to the base station. The present disclosure does not impose a specific limit on ways of transmitting the terminal information.

Alternatively, as an embodiment, when a serving base station corresponding to a current serving cell of the terminal is positioned at edge of an area covered by the second base station set, Step 520 further includes: receiving the indication information transmitted by the terminal. The indication information is further indicative of a possibility that the terminal may move out of the area covered by the second base station set.

It is to be understood that the terminal transmits indication information (referred to as first indication information for convenience of differentiation) to the base station. The first indication information is indicative of that the second base station set needs to be updated. The indication information (referred to as second indication information for convenience of differentiation) transmitted by the terminal is indicative of a possibility that the terminal may move out of the area covered by the second base station set. The first indication information and the second indication information are two pieces of indication information. That is, the first indication information and the second indication information may be transmitted by the terminal to the base station at twice, or may be transmitted by the terminal to the base station as one piece of information, on which the present disclosure does not impose a specific limit.

Alternatively, as an embodiment, when a serving base station corresponding to a current serving cell of the terminal does not belong to the second base station set, Step 520 further includes: receiving the indication information transmitted by the terminal. The indication information is further indicative of a fact that the terminal has moved out of the area covered by the second base station set.

It is to be understood that the terminal transmits indication information (referred to as first indication information for convenience of differentiation) to the base station. The first indication information is indicative of that the second base station set needs to be updated. The indication information (referred to as third indication information for convenience of differentiation) transmitted by the terminal is indicative of a possibility that the terminal may move out of the area covered by the second base station set. The first indication information and the third indication information are two pieces of indication information. That is, the first indication information and the third indication information may be transmitted by the terminal to the base station at twice, or may be transmitted by the terminal to the base station as one piece of information, on which the present disclosure does not impose a specific limit.

In Step 530, the base station obtains the first base station set.

Alternatively, as an embodiment, the first base station set is established by any network element selected from the base station, a radio network element and a core network element corresponding to the base station.

Specifically, Step 530a as shown in FIG. 5 may indicate that the first base station set is determined by the base station. After the base station determines the first base station set, a first notification information may be transmitted to a base station in the first base station set. The notification information may be used for notifying other base stations in the first base station set to establish a signaling connection between the terminal and a core network element. The base station also may transmit second notification information to a base station in the first base station set. The second notification information may be used for notifying other base stations in the first base station set to obtain, from the core network element storing context information of the terminal, the context information of the terminal.

It is to be understood that the first notification information and the second notification information may be merged into one piece of notification information. That is, when the base station transmits a notification information to a base station in the first base station set, the notification information is used for notifying the base station in the first base station set to establish a signaling connection between the terminal and a core network element, and in the meantime the notification information is also used for notifying the base station in the first base station set to obtain the context information of the terminal.

It is also to be understood that the base station in the first base station set may obtain, from the core network element storing context information of the terminal, the context information of the terminal, and also may obtain, from the base station, the context information of the terminal. That is, the base station may directly transmit the context information of the terminal to the base station in the first base station set. The present disclosure does not impose a specific limit on ways of obtaining the context information of the terminal by the base station in the first base station set.

It is also to be understood that the radio network element may be any radio network element, and the radio network element is configured to control and manage a plurality of base stations. For example, the radio network element may be a radio network controller (RNC), a base station controller (BSC) and the like, on which the present disclosure does not impose a specific limit.

Step 530b as shown in FIG. 5 may indicate that the first base station set is established by the core network element. After the first base station set is established by the core network element, the first base station set is transmitted to the base station. The base station notifies a base station in the first base station set in the way described above, which is not detailed any more herein for brevity.

Alternatively, as an embodiment, the first base station set is obtained by updating the second base station set by any network element selected from the base station, a radio network element and a core network element providing service for the terminal.

Specifically, any network element selected from the base station, the radio network element and the core network element corresponding to the base station may update, based on the second base station set configured by the terminal, the second base station set configured by the terminal by deleting and/or adding a part of base stations in the second base station set configured by the terminal, to configure the first base station set to provide service for the terminal.

Alternatively, as an embodiment, the first base station set is established, based on a recommended first base station set, by any network element selected from the base station, the radio network element and the core network element providing service for the terminal. The recommended first base station set is transmitted, by a serving cell of the terminal, to the core network element or the radio network element.

It is to be understood that the recommended first base station set may be established based on a neighboring cell prestored in a base station corresponding to a cell. The recommended first base station set also may be a first base station set with a higher utilization ratio in the first base station set where the base station corresponding to the cell is. The present disclosure does not impose a specific limit on ways of establishing the recommended first base station set.

It is also to be understood that the first base station set is established by the core network element corresponding to the base station based on the recommended first base station set. The first base station set may be a recommended base station set determined by the core network element. The first base station set may be generated by the core network element by adding and/or deleting a part of base stations in the recommended base station set based on the recommended base station set. The present disclosure does not impose a specific limit on ways of generating the first base station set.

It is also to be understood that the recommended first base station set also may be recommended by the radio network element, on which the present disclosure does not impose a specific limit.

In Step 540, the base station transmits indication information of the first base station set to the terminal. The indication information of the first base station set is indicative of a base station in the first base station set.

It is also to be understood that indication information of the first base station set may be identification information of the first base station set, or may be identification information (for example, base station ID) of each base station in the first base station set. The present disclosure does not impose a specific limit on ways of indicating a base station in the first base station set.

It is also to be understood that indication information of the first base station set may be borne in signaling of S1 interface, or may be borne in a broadcast message. The present disclosure does not impose a specific limit on ways of transmitting the indication information of the first base station set.

In Step 550, the terminal establishes a connection with network via the base station.

Alternatively, as an embodiment, a cell handover is not required for communications between the terminal and a base station in a base station set, which includes the first base station set and/or the second base station set.

Specifically, when the terminal moves within the area covered by the base station set, a base station in the base station set does not need to proceed with context information transfer for the terminal, and a signaling connection between the base station and the core network element may be not established for the terminal.

The method for wireless communication according to an embodiment of the present disclosure is described in detail above with reference to FIG. 1-FIG. 5. An apparatus for wireless communication according to an embodiment of the present disclosure is described in detail below with reference to FIG. 6-FIG. 11. It is to be understood that the apparatus as shown in FIG. 6-FIG. 11 can implement each step in FIG. 5, which is not detailed any more herein to avoid repetitions.

FIG. 6 illustrates a schematic block diagram of the apparatus for wireless communication according to an embodiment of the present disclosure. The apparatus 600 as shown in FIG. 6 includes a configuring module 610.

The configuring module 610 is configured to configure a first base station set to provide service for a terminal.

In this solution, by configuring the first base station set for the terminal, the terminal may establish a connection with network by means of a base station in the first base station set, and thus increase flexibility of the terminal in establishing the connection with network via the base station.

Alternatively, as an embodiment, at least a part of base stations in the first base station set establish a signaling connection between the terminal and a core network element; and/or at least a part of base stations in the first base station set store context information of the terminal.

Alternatively, as an embodiment, the apparatus further includes a transmitting module, configured to transmit indication information of the first base station set to the terminal. The indication information of the first base station set is indicative of a base station in the first base station set.

Alternatively, as an embodiment, the apparatus further includes a receiving module, configured to receive indication information transmitted by the terminal. The indication information is indicative of that a second base station set needs to be updated. The second base station set provides service for the terminal before configuring the first base station set to provide service for the terminal.

Alternatively, as an embodiment, when a serving base station corresponding to a current serving cell of the terminal is positioned at edge of an area covered by the second base station set, the receiving module is specifically configured to receive the indication information transmitted by the terminal. The indication information is further indicative of a possibility that the terminal may move out of the area covered by the second base station set.

Alternatively, as an embodiment, when a serving base station corresponding to a current serving cell of the terminal does not belong to the second base station set, the receiving indication information transmitted by the terminal, the receiving module is specifically configured to receive the indication information transmitted by the terminal. The indication information is further indicative of a fact that the terminal has moved out of the area covered by the second base station set.

Alternatively, as an embodiment, the configuring module is arranged in any network element selected from a base station, a radio network element and a core network element providing service for the terminal.

Alternatively, as an embodiment, the configuring module configures, based on terminal information of the terminal, the first base station set to provide service for the terminal.

Alternatively, as an embodiment, the terminal information includes at least one of information on a base station recommended by the terminal, cell list information, measurement information of cells corresponding to different base stations, and location information of the terminal.

Alternatively, as an embodiment, the signaling connection includes a signaling connection established via S1 interface between the base station and the core network element.

FIG. 7 illustrates a schematic block diagram of a terminal for wireless communication according to an embodiment of the present disclosure. The terminal 700 as shown in FIG. 7 includes a processing module 710.

The processing module 710 is configured to establish a connection with network via a base station in a first base station set.

In this solution, by configuring the first base station set for the terminal, the terminal may establish a connection with network by means of a base station in the first base station set, and thus increase flexibility of the terminal in establishing the connection with network via the base station.

Alternatively, as an embodiment, at least a part of base stations in the first base station set establish a signaling connection between the terminal and a core network element; and/or the at least a part of base stations store context information of the terminal.

Alternatively, as an embodiment, the terminal further includes a first transmitting module, configured to transmit indication information to the base station. The indication information is indicative of that a second base station set needs to be updated. The second base station set is configured to provide service for the terminal before configuring the first base station set.

Alternatively, as an embodiment, when a serving base station corresponding to a current serving cell of the terminal is positioned at edge of an area covered by the second base station set, the first transmitting module is specifically configured to transmit the indication information to the base station. The indication information is further indicative of a possibility that the terminal may move out of the area covered by the second base station set.

Alternatively, as an embodiment, when a serving base station corresponding to a current serving cell of the terminal does not belong to the second base station set, the first transmitting module is specifically configured to transmit the indication information to the base station. The indication information is further indicative of a fact that the terminal has moved out of the area covered by the second base station set.

Alternatively, as an embodiment, the terminal further includes: a configuring module, configured to configure a first base station set to provide service for the terminal; and a second transmitting module, configured to transmit indication information of the first base station set to the base station. The indication information of the first base station set is indicative of a base station in the first base station set.

Alternatively, as an embodiment, the configuring module is specifically configured to configure, based on terminal information of the terminal, the first base station set to provide service for the terminal.

Alternatively, as an embodiment, the terminal further includes a receiving module, configured to receive acknowledgement information transmitted by the base station. The acknowledgement information is used for notifying the terminal of the first base station set providing service for the terminal.

Alternatively, as an embodiment, the terminal information includes at least one of information on a base station recommended by the terminal, cell list information, measurement information of cells contained in different base stations, and location information of the terminal.

Alternatively, as an embodiment, the signaling connection includes a signaling connection established via S1 interface between the base station and the core network element.

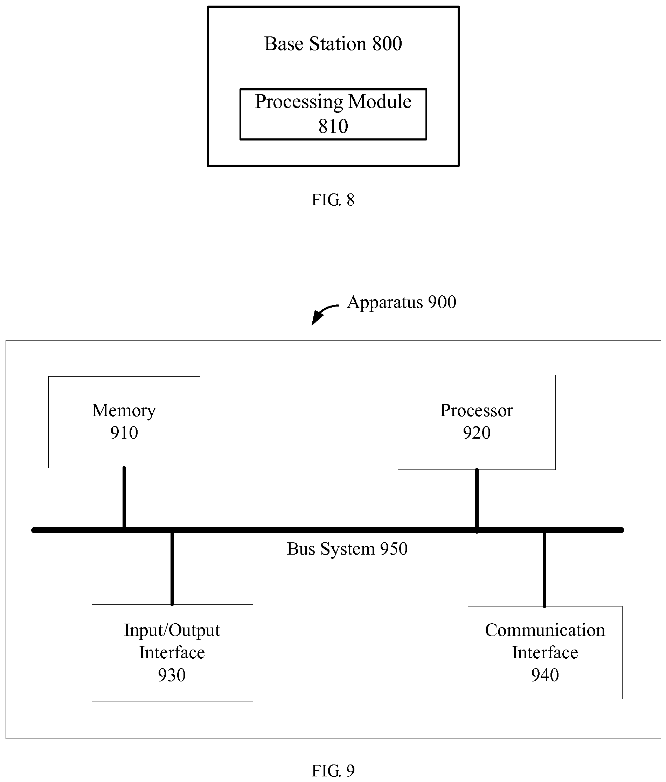

FIG. 8 illustrates a schematic block diagram of a base station for wireless communication according to an embodiment of the present disclosure. The apparatus 800 as shown in FIG. 8 includes a processing module 810.

The processing module 810 is configured to establish a connection between a terminal and a network. The processing module is arranged in a base station in a first base station set. The first base station set is configured by the terminal to provide service for the terminal.

In this solution, by configuring the first base station set for the terminal, the terminal may establish a connection with network by means of a base station in the first base station set, and thus increase flexibility of the terminal in establishing the connection with network via the base station.

Alternatively, as an embodiment, the base station further includes a first receiving module, configured to receive indication information of the first base station set transmitted by the terminal. The indication information of the first base station set is indicative of a base station in the first base station set.

Alternatively, as an embodiment, the base station further includes: at least a part of base stations in the first base station set establish a signaling connection between the terminal and a core network element; and/or the at least a part of base stations store context information of the terminal.

Alternatively, as an embodiment, the base station further includes a second receiving module, configured to receive indication information transmitted by the terminal. The indication information is indicative of that a second base station set needs to be updated. The second base station set provides service for the terminal before configuring the first base station set.

Alternatively, as an embodiment, the base station further includes: when a serving base station corresponding to a current serving cell of the terminal is positioned at edge of an area covered by the second base station set, the second receiving module is specifically configured to receive the indication information transmitted by the terminal. The indication information is further indicative of a possibility that the terminal may move out of the area covered by the second base station set.

Alternatively, as an embodiment, the base station further includes: when a serving base station corresponding to a current serving cell of the terminal does not belong to the second base station set, the second receiving module is specifically configured to receive the indication information transmitted by the terminal. The indication information is further indicative of a fact that the terminal has moved out of the area covered by the second base station set.

Alternatively, as an embodiment, the base station further includes: configuring, by the terminal based on terminal information of the terminal, the first base station set to provide service for the terminal.

Alternatively, as an embodiment, the base station further includes a transmitting module, configured to transmit acknowledgement information to the terminal. The acknowledgement information is used for notifying the terminal of the first base station set providing service for the terminal.

Alternatively, as an embodiment, the base station further includes: the terminal information includes at least one of information on a base station recommended by the terminal, cell list information, measurement information of cells contained in different base stations, and location information of the terminal.

Alternatively, as an embodiment, the base station further includes: the signaling connection includes a signaling connection established via S1 interface between the base station and the core network element.

FIG. 9 illustrates a schematic block diagram of an apparatus for wireless communication according to an embodiment of the present disclosure. The apparatus 900 as shown in FIG. 9 includes: a memory 910, a processor 920, an input/output interface 930, a communication interface 940, and a bus system 950. The memory 910, the processor 920, the input/output interface 930 and the communication interface 940 are connected via the bus system 950. The memory 910 is configured to store instructions. The processor 920 is configured to execute the instructions stored in the memory 910 to control the input/output interface 930 to receive inputted data and information and output data such as an operation result and to control the communication interface 940 to transmit a signal.

The processor 920 is configured to configure a first base station set to provide service for a terminal.

It is to be understood that in this embodiment of the present disclosure, the processor 920 may use a general-purpose central processing unit (CPU), a microprocessor, an application specific integrated circuit (ASIC) or one or more integrated circuits to execute relevant programs to implement the technical solution provided by this embodiment of the present disclosure.

It is also to be understood that the communication interface 940 uses, for example but is not limited to, a transceiver, to implement communications between the mobile terminal 900 and other devices or communication networks.

The memory 910 may include a read-only memory (ROM) and a random access memory (RAM), and provide instructions and data for the processor 520. The processor 920 may partly include a non-volatile random access memory. For example, the processor 920 also may store information on device type.

In addition to a data bus, the bus system 950 may further include a power bus, a control bus, and a status signal bus, etc. However, for clarity, all the buses in the figures are marked as the bus system 950.

In an implementation process, each step in the above method may be completed by means of integrated logic circuits or instructions in the processor 920. The method for wireless communication as disclosed by the embodiments of the present disclosure may be directly embodied as implemented by a hardware processor, or implemented in combination of hardware and software modules in the processor. The software module may be in memory media mature in the art, for example, a random access memory, a flash memory, a read-only memory (ROM), a programmable read-only memory (PROM) or an electrically erasable programmable memory, and a register, etc. The memory media is in the memory 910, the processor 920 reads information in the memory 910, and steps of the above method are completed in combination with hardware thereof. To avoid repetitions, detailed description is omitted herein.

In this solution, by configuring the first base station set for the terminal, the terminal may establish a connection with network by means of a base station in the first base station set, and thus increase flexibility of the terminal in establishing the connection with network via the base station.

Alternatively, as an embodiment, at least a part of base stations in the first base station set establish a signaling connection between the terminal and a core network element; and/or at least a part of base stations in the first base station set store context information of the terminal.

Alternatively, as an embodiment, the apparatus further includes a transmitting module, configured to transmit indication information of the first base station set to the terminal. The indication information of the first base station set is indicative of a base station in the first base station set.

Alternatively, as an embodiment, the apparatus further includes a receiving module, configured to receive indication information transmitted by the terminal. The indication information is indicative of that a second base station set needs to be updated. The second base station set provides service for the terminal before configuring the first base station set to provide service for the terminal.

Alternatively, as an embodiment, when a serving base station corresponding to a current serving cell of the terminal is positioned at edge of an area covered by the second base station set, the receiving indication information transmitted by the terminal, the receiving module is specifically configured to receive the indication information transmitted by the terminal. The indication information is further indicative of a possibility that the terminal may move out of the area covered by the second base station set.

Alternatively, as an embodiment, when a serving base station corresponding to a current serving cell of the terminal does not belong to the second base station set, the receiving indication information transmitted by the terminal, the receiving module is specifically configured to receive the indication information transmitted by the terminal. The indication information is further indicative of a fact that the terminal has moved out of the area covered by the second base station set.

Alternatively, as an embodiment, the configuring module is arranged in any network element selected from a base station, a radio network element and a core network element providing service for the terminal.

Alternatively, as an embodiment, the configuring module configures, based on terminal information of the terminal, the first base station set to provide service for the terminal.

Alternatively, as an embodiment, the terminal information includes at least one of information on a base station recommended by the terminal, cell list information, measurement information of cells corresponding to different base stations, and location information of the terminal.

Alternatively, as an embodiment, the signaling connection includes a signaling connection established via S1 interface between the base station and the core network element.

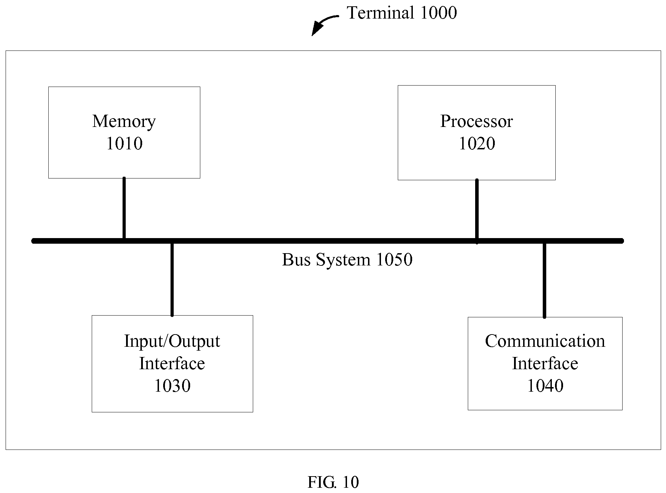

FIG. 10 illustrates a schematic block diagram of a terminal for wireless communication according to an embodiment of the present disclosure. The terminal 1000 as shown in FIG. 10 includes: a memory 1010, a processor 1020, an input/output interface 1030, a communication interface 1040, and a bus system 1050. The memory 1010, the processor 1020, the input/output interface 1030 and the communication interface 1040 are connected via the bus system 1050. The memory 1010 is configured to store instructions. The processor 1020 is configured to execute the instructions stored in the memory 1010 to control the input/output interface 1030 to receive inputted data and information and output data such as an operation result and to control the communication interface 1040 to transmit a signal.

The processor 1020 is configured to establish a connection with network via a base station in a first base station set.

It is to be understood that in this embodiment of the present disclosure, the processor 1020 may use a general-purpose central processing unit (CPU), a microprocessor, an application specific integrated circuit (ASIC) or one or more integrated circuits to execute relevant programs to implement the technical solution provided by this embodiment of the present disclosure.

It is also to be understood that the communication interface 1040 uses, for example but is not limited to, a transceiver, to implement communications between the mobile terminal 1000 and other devices or communication networks.

The memory 1010 may include a read-only memory (ROM) and a random access memory (RAM), and provide instructions and data for the processor 520. The processor 1020 may partly include a non-volatile random access memory. For example, the processor 1020 also may store information on device type.

In addition to a data bus, the bus system 1050 may further include a power bus, a control bus, and a status signal bus, etc. However, for clarity, all the buses in the figures are marked as the bus system 1050.

In an implementation process, each step in the above method may be completed by means of integrated logic circuits or instructions in the processor 1020. The method for wireless communication as disclosed by the embodiments of the present disclosure may be directly embodied as implemented by a hardware processor, or implemented in combination of hardware and software modules in the processor. The software module may be in memory media mature in the art, for example, a random access memory, a flash memory, a read-only memory (ROM), a programmable read-only memory (PROM) or an electrically erasable programmable memory, and a register, etc. The memory media is in the memory 1010, the processor 1020 reads information in the memory 1010, and steps of the above method are completed in combination with hardware thereof. To avoid repetitions, detailed description is omitted herein.

In this solution, by configuring the first base station set for the terminal, the terminal may establish a connection with network by means of a base station in the first base station set, and thus increase flexibility of the terminal in establishing the connection with network via the base station.

Alternatively, as an embodiment, at least a part of base stations in the first base station set establish a signaling connection between the terminal and a core network element; and/or the at least a part of base stations store context information of the terminal.

Alternatively, as an embodiment, the terminal further includes a first transmitting module, configured to transmit indication information to the base station. The indication information is indicative of that a second base station set needs to be updated. The second base station set is configured to provide service for the terminal before configuring the first base station set.

Alternatively, as an embodiment, when a serving base station corresponding to a current serving cell of the terminal is positioned at edge of an area covered by the second base station set, the first transmitting module is specifically configured to transmit the indication information to the base station. The indication information is further indicative of a possibility that the terminal may move out of the area covered by the second base station set.

Alternatively, as an embodiment, when a serving base station corresponding to a current serving cell of the terminal does not belong to the second base station set, the first transmitting module is specifically configured to transmit the indication information to the base station. The indication information is further indicative of a fact that the terminal has moved out of the area covered by the second base station set.

Alternatively, as an embodiment, the terminal further includes: a configuring module, configured to configure a first base station set to provide service for the terminal; and a second transmitting module, configured to transmit indication information of the first base station set to the base station. The indication information of the first base station set is indicative of a base station in the first base station set.

Alternatively, as an embodiment, the configuring module is specifically configured to configure, based on terminal information of the terminal, the first base station set to provide service for the terminal.

Alternatively, as an embodiment, the terminal further includes a receiving module, configured to receive acknowledgement information transmitted by the base station. The acknowledgement information is used for notifying the terminal of the first base station set providing service for the terminal.

Alternatively, as an embodiment, the terminal information includes at least one of information on a base station recommended by the terminal, cell list information, measurement information of cells contained in different base stations, and location information of the terminal.

Alternatively, as an embodiment, the signaling connection includes a signaling connection established via S1 interface between the base station and the core network element.

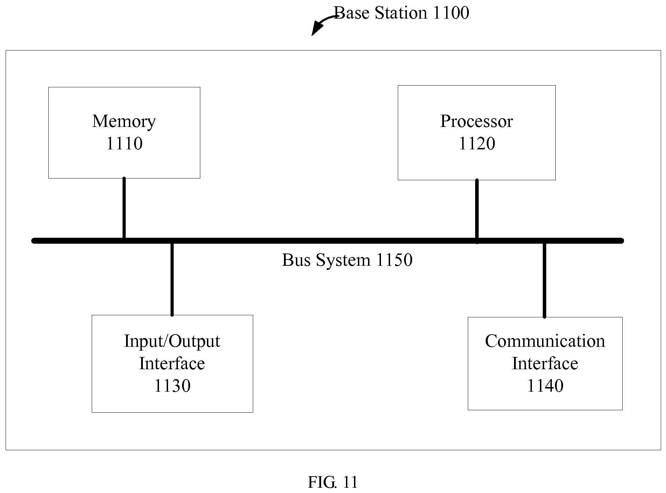

FIG. 11 illustrates a schematic block diagram of a base station for wireless communication according to an embodiment of the present disclosure. The base station 1100 as shown in FIG. 11 includes: a memory 1110, a processor 1120, an input/output interface 1130, a communication interface 1140, and a bus system 1150. The memory 1110, the processor 1120, the input/output interface 1130 and the communication interface 1140 are connected via the bus system 1150. The memory 1110 is configured to store instructions. The processor 1120 is configured to execute the instructions stored in the memory 1110 to control the input/output interface 1130 to receive inputted data and information and output data such as an operation result and to control the communication interface 1140 to transmit a signal.

The processor 1120 is configured to establish a connection between a terminal and a network. The processing module is arranged in a base station in a first base station set. The first base station set is configured by the terminal to provide service for the terminal.

It is to be understood that in this embodiment of the present disclosure, the processor 1120 may use a general-purpose central processing unit (CPU), a microprocessor, an application specific integrated circuit (ASIC) or one or more integrated circuits to execute relevant programs to implement the technical solution provided by this embodiment of the present disclosure.

It is also to be understood that the communication interface 1140 uses, for example but is not limited to, a transceiver, to implement communications between the mobile terminal 1100 and other devices or communication networks.

The memory 1110 may include a read-only memory (ROM) and a random access memory (RAM), and provide instructions and data for the processor 520. The processor 1120 may partly include a non-volatile random access memory. For example, the processor 1120 also may store information on device type.

In addition to a data bus, the bus system 1150 may further include a power bus, a control bus, and a status signal bus, etc. However, for clarity, all the buses in the figures are marked as the bus system 1150.

In an implementation process, each step in the above method may be completed by means of integrated logic circuits or instructions in the processor 1120. The method for wireless communication as disclosed by the embodiments of the present disclosure may be directly embodied as implemented by a hardware processor, or implemented in combination of hardware and software modules in the processor. The software module may be in memory media mature in the art, for example, a random access memory, a flash memory, a read-only memory (ROM), a programmable read-only memory (PROM) or an electrically erasable programmable memory, and a register, etc. The memory media is in the memory 1110, the processor 1120 reads information in the memory 1110, and steps of the above method are completed in combination with hardware thereof. To avoid repetitions, detailed description is omitted herein.

In this solution, by configuring the first base station set for the terminal, the terminal may establish a connection with network by means of a base station in the first base station set, and thus increase flexibility of the terminal in establishing the connection with network via the base station.

Alternatively, as an embodiment, the base station further includes a first receiving module, configured to receive indication information of the first base station set transmitted by the terminal. The indication information of the first base station set is indicative of a base station in the first base station set.

Alternatively, as an embodiment, the base station further includes: at least a part of base stations in the first base station set establish a signaling connection between the terminal and a core network element; and/or the at least a part of base stations store context information of the terminal.

Alternatively, as an embodiment, the base station further includes a second receiving module, configured to receive indication information transmitted by the terminal. The indication information is indicative of that a second base station set needs to be updated. The second base station set provides service for the terminal before configuring the first base station set.

Alternatively, as an embodiment, the base station further includes: when a serving base station corresponding to a current serving cell of the terminal is positioned at edge of an area covered by the second base station set, the second receiving module is specifically configured to receive the indication information transmitted by the terminal. The indication information is further indicative of a possibility that the terminal may move out of the area covered by the second base station set.

Alternatively, as an embodiment, the base station further includes: when a serving base station corresponding to a current serving cell of the terminal does not belong to the second base station set, the second receiving module is specifically configured to receive the indication information transmitted by the terminal. The indication information is further indicative of a fact that the terminal has moved out of the area covered by the second base station set.

Alternatively, as an embodiment, the base station further includes: configuring, by the terminal based on terminal information of the terminal, the first base station set to provide service for the terminal.

Alternatively, as an embodiment, the base station further includes a transmitting module, configured to transmit acknowledgement information to the terminal. The acknowledgement information is used for notifying the terminal of the first base station set providing service for the terminal.

Alternatively, as an embodiment, the base station further includes: the terminal information includes at least one of information on a base station recommended by the terminal, cell list information, measurement information of cells contained in different base stations, and location information of the terminal.

Alternatively, as an embodiment, the base station further includes: the signaling connection includes a signaling connection established via S1 interface between the base station and the core network element.

It is to be understood that in the embodiments of the present disclosure, "B corresponding to A" represents that the B is associated with the A, and the B may be determined based on the A. It is also to be understood that to determine the B based on the A does not mean that the B is determined merely based on the A, instead, the B may be determined based on the A and/or other information.

It is to be understood that the "and/or" used for describing an association relationship between association objects represents presence of three relationships. For example, A and/or B may represent presence of the A only, presence of both the A and the B, and presence of the B only. Moreover, Character "/" generally indicates that an "or" relationship is between the association objects.

It is to be understood that in the embodiments of the present disclosure, a sequence number of each step does not mean an execution sequence, and the execution sequence of each step shall be determined by its function and an internal logic, and shall not impose a limit on the implementation process of the embodiments of the present disclosure.

Persons of ordinary skill in the art may realize that it is possible to implement, by electronic hardware or a combination of computer software and electronic hardware, steps of units and methods in various examples as described in the embodiments disclosed herein. Whether these functions are executed in a hardware mode or a software mode depends on specific applications and design constraints on the technical solutions. Technical professionals may use different methods to implement functions as described in each of the specific applications. However, the implementation shall be not believed beyond the scope of the present disclosure.

Persons skilled in the art may clearly understand that for a convenient and concise description, a concrete work process of systems, apparatuses and units described above may refer to a corresponding process of the foregoing method embodiments, which is not repeated anymore herein.

From several embodiments provided in the present disclosure, it should be understood that the disclosed systems, apparatuses and methods may be implemented in other ways. For example, the apparatus embodiments described above are merely exemplary. For example, a unit partition is merely a logic functional partition. In actual implementation, additional manners of partitioning may be available. For example, multiple units or components may be combined or integrated into another system, or some features may be ignored and not executed. For another thing, intercoupling or direct coupling or communications connection displayed or discussed may be indirect coupling or communications connection, electrical or mechanical or in other forms, by means of some interfaces, apparatuses or units.

The unit serving as a detached component may be or not be physically detached, the component serving as a unit display may be or not be a physical unit, i.e., either located at one place or distributed on a plurality of network elements. Units may be selected in part or in whole according to actual needs for achieving objectives of the solution of this embodiment.

In addition, various functional units in various embodiments of the present disclosure may be integrated into one processing module, or various units may be separately or physically existent, or two or more units may be integrated into one unit.

The functions may be stored in a computer-readable storage medium if they are implemented in the form of software function units and are sold or used as independent products. Based on such an understanding, the technical solution of the present disclosure in essence or that part of contribution to the prior art or a part of the technical solution may be embodied in the form of software products, which may be stored in a storage medium, comprising some instructions to cause a computer device (a personal computer, a server or a network device and so on) to execute all or a part of steps of the method as recited in the embodiments of the present disclosure. The aforementioned storage medium comprises: a USB flash disk, a mobile hard disk, a read-only memory (ROM), a random access memory (RAM), a magnetic disk or an optical disk and other media capable of storing a program code.

The abovementioned embodiments are merely the embodiments of the present disclosure, but the protection scope of the present disclosure is not limited thereto. Any variation or substitution easily conceivable to a person of ordinary skills in the art within the technical scope disclosed in the present disclosure shall fall into the protection scope of the present disclosure. Therefore, the protection scope of the present disclosure shall be subject to the protection scope of the claims.

## Claims

1. A method for wireless communication, comprising:
configuring a first base station set to provide service for a terminal.

2. The method according to claim 1, wherein at least a part of base stations in the first base station set are configured to establish a signaling connection between the terminal and a core network element; and/or
at least a part of base stations in the first base station set are configured to store context information of the terminal.

3. The method according to claim 1 or 2, further comprising:
transmitting indication information of the first base station set to the terminal, the indication information of the first base station set being indicative of a base station in the first base station set.

4. The method according to any one of claims 1-3, wherein before the configuring a first base station set to provide service for a terminal, the method further comprises:
receiving indication information transmitted by the terminal, the indication information being indicative of that a second base station set needs to be updated, the second base station set being configured to provide service for the terminal before configuring the first base station set to provide service for the terminal.

5. The method according to claim 4, wherein when a serving base station corresponding to a current serving cell of the terminal is positioned at edge of an area covered by the second base station set, the receiving indication information transmitted by the terminal comprises:
receiving the indication information transmitted by the terminal, the indication information being further indicative of a possibility that the terminal may move out of the area covered by the second base station set.

6. The method according to claim 4, wherein when a serving base station corresponding to a current serving cell of the terminal does not belong to the second base station set, the receiving indication information transmitted by the terminal comprises:
receiving the indication information transmitted by the terminal, the indication information being further indicative of a fact that the terminal has moved out of the area covered by the second base station set.

7. The method according to any one of claims 1-6, wherein the configuring a first base station set to provide service for a terminal comprises:
configuring, by any network element selected from a base station, a radio network element and a core network element providing service for the terminal, the first base station set to provide service for the terminal.

8. The method according to claim 7, wherein the configuring, by any network element selected from a base station, a radio network element and a core network element providing service for the terminal, the first base station set to provide service for the terminal comprises:
configuring, by any network element selected from a base station, a radio network element and a core network element providing service for the terminal, the first base station set to provide service for the terminal based on terminal information of the terminal.

9. The method according to claim 8, wherein the terminal information comprises at least one of information on a base station recommended by the terminal, cell list information, measurement information of cells corresponding to different base stations, and location information of the terminal.

10. The method according to any one of claims 1-9, wherein the signaling connection comprises a signaling connection established via S1 interface between the base station and the core network element.

11. A method for wireless communication, comprising:
establishing, by a terminal, a connection with network via a base station in a first base station set.

12. The method according to claim 11, wherein at least a part of base stations in the first base station set are configured to establish a signaling connection between the terminal and a core network element; and/or
at least a part of base stations are configured to store context information of the terminal.

13. The method according to claim 11 or 12, further comprising:
transmitting indication information by the terminal to the base station, the indication information being indicative of that a second base station set needs to be updated, the second base station set being configured to provide service for the terminal before configuring the first base station set.

14. The method according to claim 13, wherein when a serving base station corresponding to a current serving cell of the terminal is positioned at edge of an area covered by the second base station set, the transmitting indication information by the terminal to the base station comprises:
transmitting the indication information by the terminal to the base station, the indication information being further indicative of a possibility that the terminal may move out of the area covered by the second base station set.

15. The method according to claim 13, wherein when a serving base station corresponding to a current serving cell of the terminal does not belong to the second base station set, the transmitting indication information by the terminal to the base station comprises:
transmitting the indication information by the terminal to the base station, the indication information being further indicative of a fact that the terminal has moved out of the area covered by the second base station set.

16. The method according to any one of claims 11-15, further comprising:
configuring, by the terminal, the first base station set to provide service for the terminal; and
transmitting, by the terminal, indication information of the first base station set to the base station, the indication information of the first base station set being indicative of a base station in the first base station set.

17. The method according to claim 16, wherein the configuring, by the terminal, the first base station set to provide service for the terminal comprises:
configuring, by the terminal based on terminal information of the terminal, the first base station set to provide service for the terminal.

18. The method according to claim 16 or 17, further comprising:
receiving, by the terminal, acknowledgement information transmitted by the base station, the acknowledgement information being used for notifying the terminal of the first base station set providing service for the terminal.

19. The method according to claim 17, wherein the terminal information comprises at least one of information on a base station recommended by the terminal, cell list information, measurement information of cells contained in different base stations, and location information of the terminal.

20. The method according to any one of claims 11-19, wherein the signaling connection comprises a signaling connection established via S1 interface between the base station and the core network element.

21. A method for wireless communication, comprising:
establishing, by a base station in a first base station set, a connection between a terminal and a network, the first base station set being configured by the terminal to provide service for the terminal.

22. The method according to claim 21, further comprising:
receiving, by the base station, indication information of the first base station set transmitted by the terminal, the indication information of the first base station set being indicative of a base station in the first base station set.

23. The method according to claim 21 or 22, wherein at least a part of base stations in the first base station set are configured to establish a signaling connection between the terminal and a core network element; and/or
at least a part of base stations are configured to store context information of the terminal.

24. The method according to any one of claims 21-23, further comprising:
receiving, by the base station, indication information transmitted by the terminal, the indication information being indicative of that a second base station set needs to be updated, the second base station set being configured to provide service for the terminal before configuring the first base station set.

25. The method according to claim 24, wherein when a serving base station corresponding to a current serving cell of the terminal is positioned at edge of an area covered by the second base station set, the receiving, by the base station, indication information transmitted by the terminal comprises:
receiving, by the base station, the indication information transmitted by the terminal, the indication information being further indicative of a possibility that the terminal may move out of the area covered by the second base station set.

26. The method according to claim 24, wherein when a serving base station corresponding to a current serving cell of the terminal does not belong to the second base station set, the receiving, by the base station, indication information transmitted by the terminal comprises:
receiving, by the base station, the indication information transmitted by the terminal, the indication information being further indicative of a fact that the terminal has moved out of the area covered by the second base station set.

27. The method according to any one of claims 21-26, wherein the terminal is configured to configure, based on terminal information of the terminal, the first base station set to provide service for the terminal.

28. The method according to any one of claims 21-27, further comprising:
transmitting, by the base station, acknowledgement information to the terminal, the acknowledgement information being used for notifying the terminal of the first base station set providing service for the terminal.

29. The method according to claim 27, wherein the terminal information comprises at least one of information on a base station recommended by the terminal, cell list information, measurement information of cells contained in different base stations, and location information of the terminal.

30. The method according to any one of claims 21-29, wherein the signaling connection comprises a signaling connection established via S1 interface between the base station and the core network element.

31. An apparatus for wireless communication, comprising:
a configuring module, configured to configure a first base station set to provide service for a terminal.

32. The apparatus according to claim 31, wherein at least a part of base stations in the first base station set are configured to establish a signaling connection between the terminal and a core network element; and/or
at least a part of base stations in the first base station set are configured to store context information of the terminal.

33. The apparatus according to claim 31 or 32, further comprising:
a transmitting module, configured to transmit indication information of the first base station set to the terminal, the indication information of the first base station set being indicative of a base station in the first base station set.

34. The apparatus according to any one of claims 31-33, further comprising:
a receiving module, configured to receive indication information transmitted by the terminal, the indication information being indicative of that a second base station set needs to be updated, the second base station set being configured to provide service for the terminal before configuring the first base station set to provide service for the terminal.

35. The apparatus according to claim 34, wherein a serving base station to which a current serving cell of the terminal belongs is positioned at an edge of an area covered by the second base station set, and the receiving indication information transmitted by the terminal, and
the receiving module is specifically configured to receive the indication information transmitted by the terminal, the indication information being further indicative of a possibility that the terminal may move out of the area covered by the second base station set.

36. The apparatus according to claim 34, wherein when a serving base station corresponding to a current serving cell of the terminal does not belong to the second base station set,
the receiving module is specifically configured to receive the indication information transmitted by the terminal, the indication information being further indicative of a fact that the terminal has moved out of the area covered by the second base station set.

37. The apparatus according to any one of claims 31-36, wherein the configuring module is arranged in any network element selected from a base station, a radio network element and a core network element providing service for the terminal.

38. The apparatus according to claim 37, wherein the configuring module is configured to configure, based on terminal information of the terminal, the first base station set to provide service for the terminal.

39. The apparatus according to claim 38, wherein the terminal information comprises at least one of information on a base station recommended by the terminal, cell list information, measurement information of cells corresponding to different base stations, and location information of the terminal.

40. The apparatus according to any one of claims 31-39, wherein the signaling connection comprises a signaling connection established via S1 interface between the base station and the core network element.

41. A terminal for wireless communication, comprising:
a processing module, configured to establish a connection with network via a base station in a first base station set.

42. The terminal according to claim 41, wherein at least a part of base stations in the first base station set are configured to establish a signaling connection between the terminal and a core network element; and/or
at least a part of base stations are configured to store context information of the terminal.

43. The terminal according to claim 41 or 42, further comprising:
a first transmitting module, configured to transmit indication information to the base station, the indication information being indicative of that a second base station set needs to be updated, the second base station set being configured to provide service for the terminal before configuring the first base station set.

44. The terminal according to claim 43, wherein when a serving base station corresponding to a current serving cell of the terminal is positioned at edge of an area covered by the second base station set,
the first transmitting module is specifically configured to transmit the indication information to the base station, the indication information being further indicative of a possibility that the terminal may move out of the area covered by the second base station set.

45. The terminal according to claim 43, wherein when a serving base station corresponding to a current serving cell of the terminal does not belong to the second base station set,
the first transmitting module is specifically configured to transmit the indication information to the base station, the indication information being further indicative of a fact that the terminal has moved out of the area covered by the second base station set.

46. The terminal according to any one of claims 41-45, further comprising:
a configuring module, configured to configure the first base station set to provide service for the terminal; and
a second transmitting module, configured to transmit indication information of the first base station set to the base station, the indication information of the first base station set being indicative of a base station in the first base station set.

47. The terminal according to claim 46, wherein
the configuring module is specifically configured to configure, based on terminal information of the terminal, the first base station set to provide service for the terminal.

48. The terminal according to claim 46 or 47, further comprising:
a receiving module, configured to receive acknowledgement information transmitted by the base station, the acknowledgement information being used for notifying the terminal of the first base station set providing service for the terminal.

49. The terminal according to claim 47, wherein the terminal information comprises at least one of information on a base station recommended by the terminal, cell list information, measurement information of cells contained in different base stations, and location information of the terminal.

50. The terminal according to any one of claims 41-49, wherein the signaling connection comprises a signaling connection established via S1 interface between the base station and the core network element.

51. Abase station for wireless communication, comprising:
a processing module, configured to establish a connection between a terminal and a network, the processing module being arranged in a base station in a first base station set, and the first base station set being configured by the terminal to provide service for the terminal.

52. The base station according to claim 51, further comprising:
a first receiving module, configured to receive indication information of the first base station set transmitted by the terminal, the indication information of the first base station set being indicative of a base station in the first base station set.

53. The base station according to claim 51 or 52, wherein at least a part of base stations in the first base station set are configured to establish a signaling connection between the terminal and a core network element; and/or
at least a part of base stations are configured to store context information of the terminal.

54. The base station according to any one of claims 51-53, further comprising:
a second receiving module, configured to receive indication information transmitted by the terminal, the indication information being indicative of that a second base station set needs to be updated, the second base station set being configured to provide service for the terminal before configuring the first base station set.

55. The base station according to claim 54, wherein when a serving base station corresponding to a current serving cell of the terminal is positioned at edge of an area covered by the second base station set,
the second receiving module is specifically configured to receive the indication information transmitted by the terminal, the indication information being further indicative of a possibility that the terminal may move out of the area covered by the second base station set.

56. The base station according to claim 54, wherein when a serving base station corresponding to a current serving cell of the terminal does not belong to the second base station set,
the second receiving module is specifically configured to receive the indication information transmitted by the terminal, the indication information being further indicative of a fact that the terminal has moved out of the area covered by the second base station set.

57. The base station according to any one of claims 51-56, wherein the terminal is configured to configure, based on terminal information of the terminal, the first base station set to provide service for the terminal.

58. The base station according to any one of claims 51-57, further comprising:
a transmitting module, configured to transmit acknowledgement information to the terminal, the acknowledgement information being used for notifying the terminal of the first base station set providing service for the terminal.

59. The base station according to claim 57, wherein the terminal information comprises at least one of information on a base station recommended by the terminal, cell list information, measurement information of cells contained in different base stations, and location information of the terminal.

60. The base station according to any one of claims 51-59, wherein the signaling connection comprises a signaling connection established via S1 interface between the base station and the core network element.
